# FASCICULE DE BREVET EUROPEEN

(11) **EP 3 408 172 B1**
(45) Date de publication et mention de la délivrance du brevet: **19.08.2020**
(21) Numéro de dépôt: 17701132.7
(22) Date de dépôt: 24.01.2017
(51) Int. Cl.: B64C 9/22, B64D 15/12

(54) **AILE D'AERONEF COMPRENANT UN VOLET MOBILE ET UN BOITIER DE RANGEMENT DE TUBULURE SOUPLE**
LUFTFAHRZEUGFLÜGEL MIT EINER BEWEGLICHEN KLAPPE UND EINEM BEHÄLTER ZUR UNTERBRINGUNG EINES FLEXIBLEN SCHLAUCHS
AIRCRAFT WING COMPRISING A SLAT AND A CONTAINER FOR STORING A FLEXIBLE TUBE

(30) Priorité: 27.01.2016 BE 201605069
(43) Date de publication de la demande: 05.12.2018
(73) Titulaire: Sonaca S.A., 6041 Gosselies (BE)
(72) Inventeur: DUMONT, Nicolas, 59690 Vieux-Conde (FR); PENOUILH, Sylvain, 1050 Ixelles (BE)
(74) Mandataire: Brevalex
(86) Numéro de dépôt international: PCT/EP2017/051361
(87) Numéro de publication internationale: WO 2017/129536

(56) Documents cités:
- EP-A1- 2 116 467
- EP-A1- 2 733 064
- GB-A- 2 417 937
- US-A1- 2014 166 835

## Description

### DOMAINE TECHNIQUE

L'invention se rapporte aux ailes d'aéronef. L'aile comprend un corps central fixe et un ou plusieurs volets mobiles de bord d'attaque, chacun destiné à être déplacé en rotation par rapport au corps central fixe.

### ÉTAT DE LA TECHNIQUE ANTÉRIEURE

Sur les aéronefs, chacune des deux ailes de la voilure est généralement équipée de volets mobiles hypersustentateurs situés au bord d'attaque et au bord de fuite de l'aile.

Les volets sont déployés pour les phases d'atterrissage et de décollage afin d'augmenter la portance à faible ou moyenne vitesse. Par ailleurs, en vol et en régime de croisière, les volets mobiles sont rentrés pour limiter la résistance à l'avancement de l'aéronef.

Le déplacement de chaque volet s'effectue à l'aide de rails de guidage, tels que ceux connus du document EP 0 818 387. Ces rails permettent de déplacer chaque volet mobile de bord d'attaque selon une trajectoire en arc de cercle par rapport au corps central fixe d'aile, entre une position rentrée dans laquelle les volets épousent sensiblement le corps fixe, et une position déployée dans laquelle ces volets sont déplacés vers l'avant.

Au moins un des volets mobiles est alimenté électriquement par des câbles qui s'étendent depuis le corps central fixe. Ces câbles sont par exemple portés par une chaîne, connue du document EP 2 167 381, qui se déploie entre une position rétractée, dans laquelle le volet mobile est rentré, et une position déroulée, dans laquelle le volet est déployé. Les documents US 2014/166835, GB2417937,EP2733064 décrivent des ailes d'aéronef ayant une partie fixe et une partie mobile. Ils montrent aussi un câble reliant la partie mobile à la partie fixe.

Néanmoins, la chaîne présente notamment une masse et un encombrement important à proximité du volet mobile.

### EXPOSÉ DE L'INVENTION

L'invention vise à résoudre au moins partiellement les problèmes rencontrés dans les solutions de l'art antérieur. À cet égard, l'invention a pour objet une aile d'aéronef.

L'aile comprend un corps central fixe, un volet mobile situé en périphérie du corps central fixe et destiné à être déplacé en rotation relativement au corps central fixe entre une position rentrée et une position déployée, une tubulure souple comprenant une première extrémité raccordée au corps central fixe et une deuxième extrémité raccordée au volet mobile, et un rail de guidage du volet mobile et de la tubulure souple. Le rail est configuré pour se déplacer entre une position rétractée et une position déployée, lorsque le volet mobile se déplace de sa position rentrée à sa position déployée.

Selon l'invention, l'aile comprend en outre un boitier de rangement de la tubulure souple, et un moyen de maintien de la tubulure souple.

Le boitier comprend une paroi conformée de manière à ce que la tubulure souple s'enroule dans le boitier en étant plaquée contre la paroi, lorsque le rail se déplace de sa position déployée à sa position rétractée.

Le moyen de maintien est configuré pour maintenir la tubulure souple contre ou à proximité du rail, le moyen de maintien étant porté par le corps central fixe.

La tubulure souple longe le rail, en étant fixée au rail à proximité de l'extrémité distale du rail au niveau de laquelle le rail est rattaché au volet mobile.

Le boitier et le moyen de maintien permettent avantageusement à la tubulure souple d'accompagner le mouvement du volet entre sa position rentrée et sa position déployée, en longeant le rail. La tubulure est alors protégée mécaniquement par le rail et le boitier.

La masse et l'encombrement de l'aile à proximité du volet mobile sont réduits du fait de l'absence de chaine. Le moyen de maintien, le boitier et la tubulure souple sont également facile à installer dans l'aile, et la tubulure est facile à remplacer.

L'invention peut comporter de manière facultative une ou plusieurs des caractéristiques suivantes combinées entre elles ou non.

Avantageusement, le moyen de maintien comprend un poussoir configuré pour retenir la tubulure contre ou à proximité du rail, un moyen de fixation configuré pour fixer le poussoir au corps central fixe, et de préférence un moyen de rappel sollicitant le poussoir en direction du rail.

Selon une particularité de réalisation, le moyen de maintien est plus proche de l'extrémité proximale du rail, à laquelle il est fixé au corps fixe, que de son extrémité distale.

Selon une forme de réalisation avantageuse, la longueur du pourtour de la paroi entre une entrée du boitier et une sortie du boitier est sensiblement égale à la différence de longueur de la tubulure souple le long du rail de guidage entre la position rétractée du rail de guidage et sa position déployée.

Selon une particularité de réalisation, le boitier comprend une entrée et/ou une sortie conformées de manière à guider la tubulure souple pour que la tubulure entre dans le boitier et/ou sorte du boitier, selon au moins une direction prédéterminée.

Avantageusement, l'entrée/la sortie du boitier comprend un déflecteur configuré pour dévier la tubulure souple selon une direction prédéterminée.

Selon une forme de réalisation avantageuse, le boitier s'étend selon une direction longitudinale qui est inclinée par rapport à la direction longitudinale du rail de guidage.

Selon une autre forme de réalisation avantageuse, le boitier s'étend selon une direction longitudinale qui est sensiblement parallèle à la direction longitudinale du rail de guidage.

Selon une autre forme de réalisation avantageuse, le boitier est réalisé et/ou positionné de façon à éviter une accumulation d'eau, afin de ne pas bloquer et endommager la tubulure en cas de gel.

Avantageusement, l'aile comprend un deuxième boitier de rangement d'une deuxième tubulure souple, le deuxième boitier comprenant une paroi conformée de manière à ce que la deuxième tubulure souple s'enroule dans le boitier en étant plaquée contre la paroi interne, lorsque le rail de guidage se déplace de sa position déployée à sa position rétractée.

Selon une particularité de réalisation, les deux tubulures souples s'étendent le long de deux côtés opposés du rail de guidage, les boitiers de rangement étant situés chacun à un des côtés opposés du rail de guidage.

Avantageusement, chaque tubulure souple comprend plusieurs câbles et/ou tuyaux solidarisés entre eux.

Selon une particularité de réalisation, chaque tubulure souple comprend un câble électrique et/ou un tuyau pneumatique, le câble électrique alimentant de préférence électriquement un système de dégivrage du volet mobile.

Avantageusement, l'aile comprend un connecteur électrique rigidement solidaire d'une face externe de paroi délimitant le boitier de rangement, la première extrémité de la tubulure souple étant reliée électriquement au connecteur électrique.

### BRÈVE DESCRIPTION DES DESSINS

La présente invention sera mieux comprise à la lecture de la description d'exemples de réalisation en faisant référence aux dessins annexés sur lesquels :
- la figure 1 est une vue en perspective d'un aéronef;
- la figure 2 est une représentation schématique et partielle en coupe d'une aile d'aéronef selon un premier mode de réalisation de l'invention, munie d'un volet mobile de bord d'attaque ;
- la figure 3 est une représentation partielle en perspective du volet mobile de l'aile selon le premier mode de réalisation, en position déployée ;
- la figure 4 est une représentation en perspective d'un rail de guidage du volet mobile et de tubulure souple de l'aile selon le premier mode de réalisation, en position déployée ;
- la figure 5 est une représentation en perspective du rail de guidage de l'aile selon le premier mode de réalisation, en position rétractée ;
- les figures 6 et 7 représentent un boitier de rangement de tubulure de l'aile selon le premier mode de réalisation ;
- la figure 8 est une représentation en perspective d'un rail de guidage d'une aile selon un deuxième mode de réalisation ;
- la figure 9 est une représentation en perspective d'un rail de guidage d'une aile selon un troisième mode de réalisation, en position déployée ;
- la figure 10 est une représentation en perspective d'un boitier de rangement de tubulure de l'aile selon le troisième mode de réalisation ;
- la figure 11 est une représentation en perspective d'un rail de guidage d'une aile selon un quatrième mode de réalisation, en position déployée.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

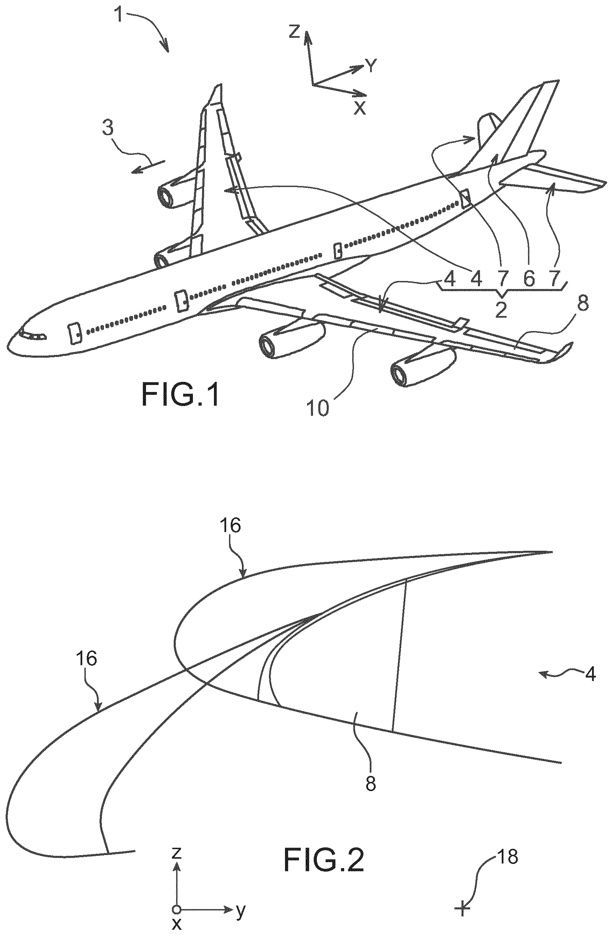

La figure 1 représente un aéronef 1 disposant d'une voilure 2 constituée d'une pluralité d'éléments de voilure, encore appelés surfaces aérodynamiques portantes.

Dans toute la description qui va suivre, les termes « avant » et « arrière » sont à considérer par rapport à une direction d'avancement de l'aéronef, cette direction d'avancement étant représentée par la flèche 3.

Parmi les éléments de voilure de l'aéronef 1, il est prévu deux ailes principales 4, une dérive verticale 6, ainsi que deux empennages horizontaux 7 situés à l'arrière de cet aéronef.

En ce qui concerne les ailes 4, celles-ci comprennent chacune un corps central fixe d'aile 8 et un bord d'attaque 10.

Le corps central fixe 8 est également dénommé portion centrale principale, ce corps constituant quasiment l'intégralité de l'aile, et étant situé en arrière du bord d'attaque 10.

Ici encore, par convention, on appelle X-X la direction longitudinale de bord d'attaque, ou encore direction d'envergure, Y-Y la direction orientée transversalement par rapport au bord d'attaque 10 de l'aile 4, et Z-Z la direction verticale, ces trois directions étant orthogonales entre-elles.

En référence à la figure 2, le bord d'attaque 10 de chacune des ailes 4 est équipé d'au moins un volet mobile de bord d'attaque 16, ce volet mobile 16 étant destiné à se déplacer relativement au corps central fixe 8.

A la figure 2, le volet mobile de bord d'attaque 16 est représenté schématiquement dans une position rentrée dans laquelle il épouse la partie avant du corps central fixe 8 de l'aile 4. Dans un tel cas, le volet mobile 16 se trouve dans sa position la plus arrière.

De plus, il est également représenté dans une position entièrement déployée dans laquelle il est à distance du corps central fixe 8 et en avant du corps central fixe 8. Cette position entièrement déployée est adoptée en particulier durant les phases d'atterrissage afin d'augmenter la portance à faible ou moyenne vitesse.

Le volet 16 est bien entendu conçu pour être déplacé entre ces deux positions extrêmes, par exemple de manière à lui faire adopter une position intermédiaire de décollage, connue de l'homme du métier.

A titre indicatif, le volet mobile 16 s'étend par exemple sur sensiblement toute la longueur de l'aile 4 selon sa direction d'envergure X-X ou bien seulement sur une partie de la longueur de l'aile 4 selon sa direction d'envergure X-X.

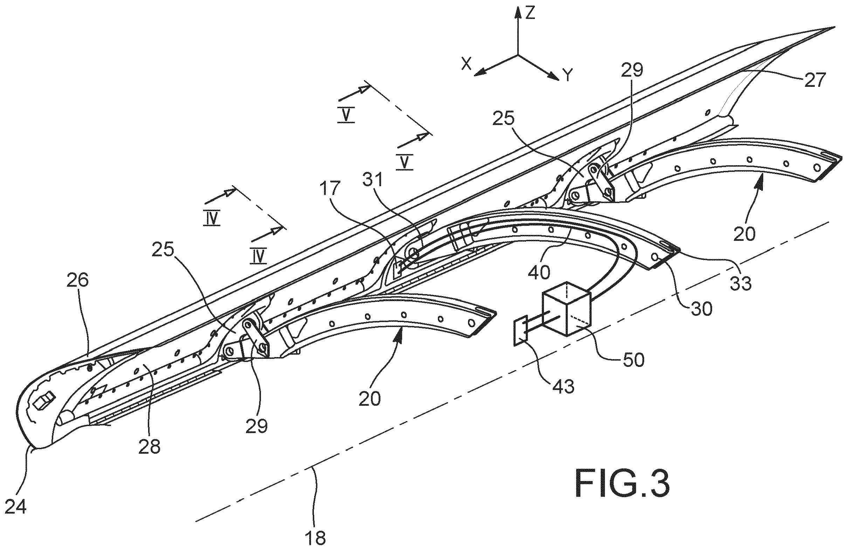

En référence à la figure 3, le volet 16 comporte un revêtement aérodynamique définissant une portion intrados 24 ainsi qu'une portion extrados 26, cette dernière se terminant par un bord de fuite 27 du volet. Le volet 16 est fermé vers l'arrière par un revêtement de fermeture 28, destiné à épouser le corps fixe d'aile 8 lorsqu'il occupe la position rétractée.

Le volet mobile 16 renferme un système de dégivrage 17 qui nécessite d'être alimenté électriquement par des câbles, que le volet 16 soit en position rentrée ou en position déployée. Ces câbles sont réunis et solidarisés entre eux au sein d'une tubulure souple 40 qui s'étend depuis le corps fixe 8 jusqu'au volet mobile 16. La tubulure souple 40 prend par exemple la forme d'une tresse de câbles électriques 43.

La figure 3 représente un dispositif de mise en mouvement du volet mobile de bord d'attaque 16, permettant de faire pivoter ce dernier par rapport au corps 8, selon un axe de rotation 18, entre la position entièrement déployée et la position rentrée.

Le dispositif de mise en mouvement comprend tout d'abord deux rails d'entraînement 20 espacés l'un de l'autre selon la direction d'envergure X-X, ces deux rails 20 présentant une forme générale courbe ou en arc de cercle, centrée sur l'axe de rotation 18 du volet.

L'extrémité avant de chaque rail d'entraînement 20 est raccordée au volet 16 par une ferrure de volet 25 faisant saillie vers l'arrière à partir du revêtement de fermeture 28, une bielle additionnelle 29 étant agencée entre cette même ferrure 25 et un point plus arrière de l'extrémité avant du rail 20.

Les rails 20 sont mis en mouvement relativement au corps fixe 8 par un mécanisme d'actionnement (non représenté) qui peut prendre diverses formes connues de l'homme du métier. Ce mécanisme comporte par exemple une roue dentée commandée par un bras rotatif à crémaillère qui est parallèle à l'axe de rotation 18.

Le dispositif de mise en mouvement du volet comporte également un rail suiveur 30 interposé entre les deux rails d'entraînement 20, de préférence à mi-distance entre ces derniers, dans la direction d'envergure X-X.

En référence conjointe aux figures 3 à 5, le rail suiveur 30 a une forme générale courbe ou en arc de cercle selon sa direction longitudinale Y-Y qui correspond sensiblement à la direction transversale de l'aile 4. Il s'étend depuis une extrémité proximale 33 qui est fixée au corps fixe 8 et une extrémité distale 31 qui est fixée au volet mobile 16.

Le rail suiveur 30 est mobile entre une position rétractée et une position déployée. Il suit le déplacement des rails d'entrainement 20 par rapport au corps central fixe 8, en accompagnant le déplacement du volet 16. Il forme alors un rail de guidage du volet mobile 16 entre sa position rétractée et sa position déployée.

En position déployée, le rail 30 est situé en dehors d'une boite de protection 39 et il est davantage situé vers l'avant de l'aéronef 1 qu'en position rétractée dans laquelle il est partiellement rangé dans la boite de protection 39.

En d'autres termes, le rail présente une longueur curviligne Li en dehors de la boite de protection 39 en position déployée qui est supérieure à sa longueur curviligne L₂ en dehors de la boite de protection 39 en position rétractée. La différence de longueur curviligne L₁-L₂ du rail en dehors de la boite de protection 39 entre sa position rétractée et sa position déployée est sensiblement égale à la distance entre la position déployée du volet mobile 16 et sa position rentrée.

Le rail 30 permet aussi de limiter l'amplitude d'une fente entre le bord de fuite 27 du volet et le corps fixe 8, en position déployée du volet mobile 16.

Le rail suiveur 30 porte la tubulure souple 40 à l'extérieur du rail 30. Celle-ci est notamment plaquée contre ou au moins maintenue à proximité d'un des flancs 32 du rail 30 par un moyen de maintien 70 qui sera décrit en détail ci-après.

La tubulure souple 40 s'étend entre une première extrémité 45 à laquelle elle est raccordée à un connecteur électrique 49 et une deuxième extrémité 47 à laquelle elle est solidarisée au volet mobile 16 pour alimenter électriquement le système de dégivrage 17. Le connecteur électrique 49 est destiné à être raccordé électriquement à un connecteur complémentaire du corps fixe 8, en étant solidaire mécaniquement du corps fixe 8.

La tubulure souple 40 longe le rail 30 sur sensiblement toute la longueur du rail selon sa direction longitudinale Y-Y, depuis le moyen de maintien 70 jusqu'à l'extrémité distale 31 du rail. La tubulure souple 40 s'étend à proximité du plan médian transversal du rail 30. Le rail 30 joue alors le rôle de rail de guidage de la tubulure 40.

La tubulure souple 40 est fixée au rail 30, à proximité de l'extrémité distale 31 du rail, au niveau du point de fixation 48. Elle est également maintenue proche du flanc 32, à proximité de sa première extrémité 45 par un poussoir 71. La tubulure souple 40 longe alors d'autant mieux le rail 30 qu'elle est sensiblement plaquée contre le rail 30, notamment à proximité de chacune des extrémités 31, 33 du rail lorsque le rail 30 est en position déployée.

Ce poussoir 71 a une forme générale de mâchoire traversée latéralement de part et d'autre pour laisser passer la tubulure souple 40 le long du rail 30. Il est par exemple réalisé dans un matériau comprenant du polytétrafluoroéthylène, également connu sous le nom de téflon™. Le poussoir 71 coulisse le long d'une tige 72 qui est elle-même fixée à sa première extrémité au corps central fixe 8 et qui est libre à sa deuxième extrémité. Cette tige 72 s'étend sensiblement transversalement à la direction longitudinale Y-Y du rail.

La tige 72 comprend un ressort de rappel 73 entre le poussoir 71 et sa deuxième extrémité. Le ressort de rappel 73 sollicite le poussoir 71 en direction du rail 30 pour qu'il maintienne la tubulure souple 40 suffisamment proche du flanc 32. Étant donné que le ressort 73 est décalé par rapport au milieu du poussoir 71, le poussoir 71 est également sollicité en direction du rail 30 par un deuxième ressort 75 opposé au premier ressort 73 le long du poussoir 71.

Le poussoir 71, la tige 72 et le ressort 73 font partie du moyen de maintien 70 qui est porté par le corps central fixe 8 au niveau de la tige 72.

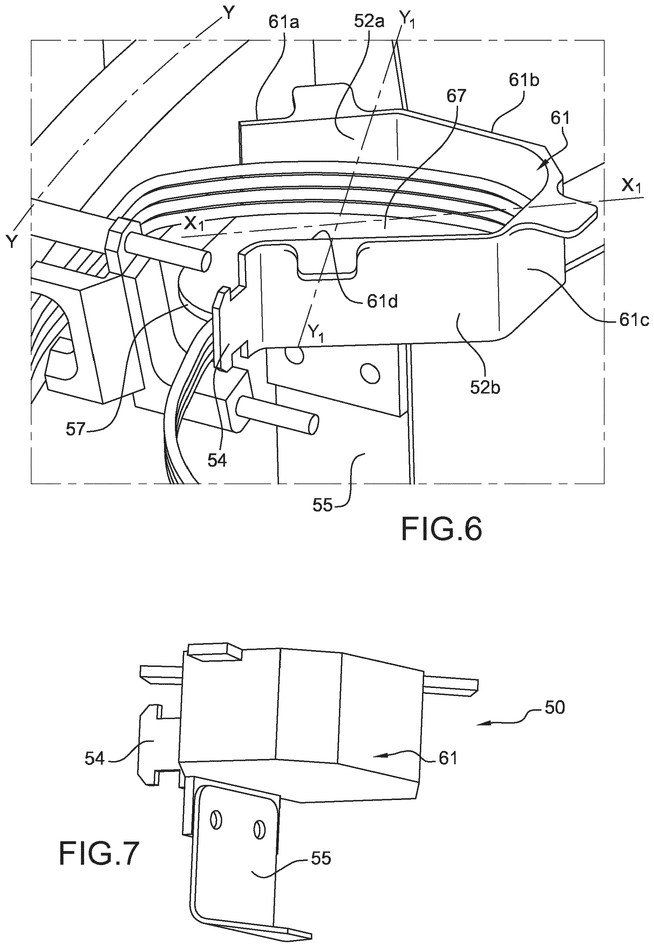

En référence conjointe aux figures 3 à 7, un boitier de rangement 50 est disposé entre la première extrémité 45 de la tubulure et le poussoir 71. Il est situé à proximité du flanc 32 du rail de guidage 30, du même côté du rail 30 que la tubulure souple 40. Il est situé en avant de la boite de protection 39.

Le boitier 50 a une forme polygonale et il comporte une longueur selon sa direction longitudinale X₁-X₁ qui est proche de son épaisseur maximale dans une direction transversale Y₁-Y₁ du boitier 50. À titre indicatif, la longueur du boitier 50 selon sa direction longitudinale X₁-X₁ est environ égale à 10cm et à environ 10 cm le long de sa direction transversale Y₁-Y₁.

La direction longitudinale X₁-X₁ du boitier 50 est inclinée d'un angle α dont la valeur est comprise entre 35° et 45° par rapport à la direction longitudinale Y-Y du rail. L'inclinaison du boitier 50 par rapport au rail 30 permet de limiter l'encombrement du boitier le long de la direction longitudinale Y-Y du rail. En contrepartie, le boitier 50 est plus large selon sa direction transversale Y₁-Y₁ que le boitier 60 du deuxième mode de réalisation.

Le boitier de rangement 50 comporte une entrée 51 pour la tubulure souple 40, une sortie 53 pour la tubulure souple 40, une paroi 61 entre l'entrée 51 et la sortie 53, ainsi qu'un fond 67 dont la paroi 61 est rigidement solidaire. Il comporte également un rebord 55 pour fixer le boitier 50 au corps fixe 8.

La paroi 61 est monobloc avec le fond 67. Le rebord de fixation 55 est fixé à la paroi 61.

La paroi 61 délimite latéralement le boitier 50. Elle comprend quatre éléments de paroi 61a, 61b, 61c et 61d deux à deux adjacents. Les premier, deuxième et quatrième éléments de paroi 61a, 61b et 61d sont sensiblement plans. Le troisième élément de paroi 61c est incurvé, en comportant un angle obtus, ce qui donne au boitier 50 une forme générale de pentagone.

Le premier élément de paroi 61a est configuré pour dévier la partie de la tubulure souple 40 située en arrière du poussoir 71 selon une direction prédéterminée, pour la rapprocher de la direction longitudinale X₁-X₁ du boitier.

La paroi 61 comprend également un déflecteur 54 au niveau de la sortie 53 du boitier, pour dévier la tubulure souple 40, de manière à ce que la tubulure souple 40 sorte du boitier avec une direction qui est sensiblement parallèle à la direction longitudinale Y-Y du boitier 50.

La paroi 61 comporte une face interne 52a et une face externe 52b opposée à la face interne. Les faces interne 52a et externe 52b sont sensiblement parallèles entre elles. La face interne 52a délimite un contour interne du boitier 50.

De manière générale, la paroi 61 est conformée de manière à ce que la tubulure souple 40 soit partiellement enroulée dans le boitier 50, en position rétractée du rail 30, en étant plaquée contre la face interne 52a de la paroi 61.

Plus spécifiquement, le boitier 50 est conformé de manière à ce que la différence de longueur curviligne du rail L₁-L₂ en dehors de la boite de protection 39 soit sensiblement égale à la longueur du pourtour de la face interne 52a de la paroi 61. De ce fait, la tubulure souple 40 fait au plus un tour de la paroi 61 à l'intérieur du boitier 50, ce qui limite les nœuds ou les risques d'accrochage de la tubulure souple 40 lorsque le rail 30 se déplace entre la position rétractée et la position déployée et vice versa.

Le boitier 50 comporte enfin une barrière 57 entre l'entrée 51 et la sortie 53 du boitier et qui est opposée à la paroi 61. La barrière 57 forme une excroissance à l'intérieure du boitier 50, qui sert à retenir la tubulure souple 40, lorsque le rail 30 est en position déployée. Elle est aussi destinée à contraindre en hauteur la tubulure souple 40 en entrée 51 et/ou en sortie 53 du boitier 50..

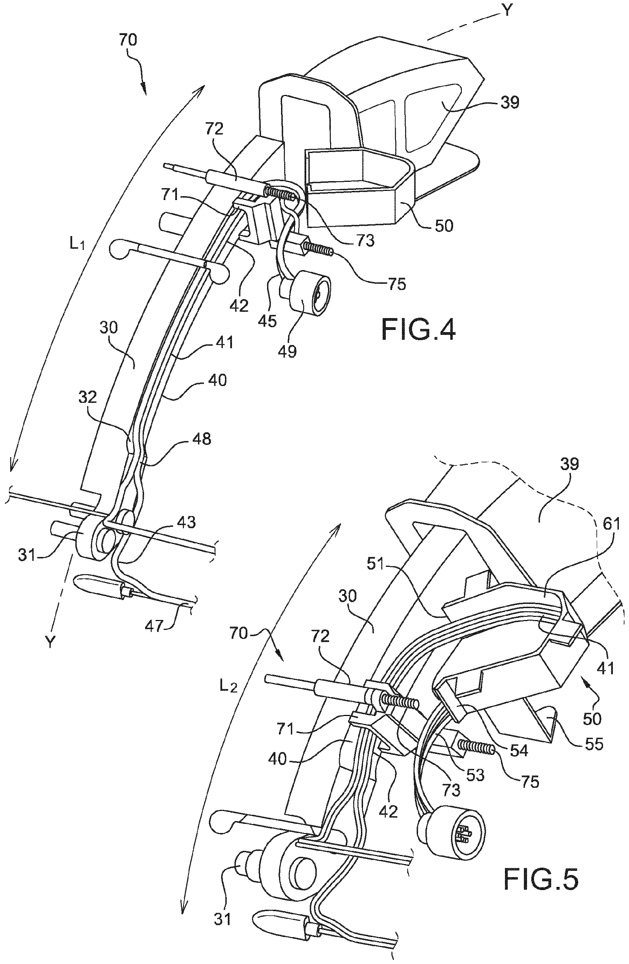

Le mouvement de déploiement/de rétractation du volet mobile 16 relativement au corps fixe 8 est décrit en référence conjointe aux figures 4 et 5.

En position déployée du volet 16, le rail 30 est en position déployée. La tubulure souple 40 s'étend le long du rail sur sensiblement toute la longueur du rail 30 selon sa direction longitudinale Y-Y, entre l'extrémité distale 31 du rail et le poussoir 71.

La portion de la tubulure souple 40 entre le poussoir 71 et le connecteur 49 traverse l'entrée 51 du boitier, longe la barrière 57, et ressort par la sortie 53, de manière à limiter au maximum la longueur de la tubulure 40 dans le boitier 50.

En position rentrée du volet 16, le rail 30 est en position rétractée. Une deuxième portion 42 de longueur assez faible par rapport à la longueur totale de la tubulure 40 s'étend le long du rail 30 selon sa direction longitudinale Y-Y, entre l'extrémité distale 31 du rail et le poussoir 71.

La première portion 41 de la tubulure souple 40, qui est située entre le poussoir 71 et le connecteur 49, traverse l'entrée 51 du boitier, longe la face interne 52a de la paroi 61 avec laquelle elle est en contact mécanique sur tout le pourtour du boitier 50, et sort par la sortie 53 au niveau de laquelle elle est déviée par le déflecteur 54.

Lorsque le rail 30 passe de sa position déployée représentée à la figure 4 à sa position rétractée représentée à la figure 5, une partie de la tubulure souple 40 qui longeait le rail 30 est guidée à l'intérieur du boitier 50. Cette première portion 41 de tubulure souple est déviée par le premier élément de paroi 61a, pour épouser progressivement tout le contour interne de la paroi 61 au fur et à mesure que le rail 30 se rétracte et que la première portion 41 de tubulure souple s'introduit dans le boitier 50.

Tout au long du mouvement de rétractation du rail 30, une portion de tubulure souple 40 de longueur sensiblement constante dépasse de la sortie 53 du boitier jusqu'au connecteur 49.

Lorsque le rail 30 passe de sa position rétractée représentée à la figure 5 à sa position déployée représentée à la figure 4, la tubulure souple 40 cesse progressivement de longer la face interne 54a de la paroi 61 pour se rapprocher de la barrière 57, une portion 41 de la tubulure souple 40 sort progressivement du boitier par l'entrée 51 pour accompagner le déploiement du rail 30.

Le mouvement de rétractation/déploiement du rail 30 modifie la longueur de tubulure souple 40 dans le boitier 50 mais pas la longueur de tubulure souple 40 en sortie 53 du boitier 50 qui reste sensiblement constante.

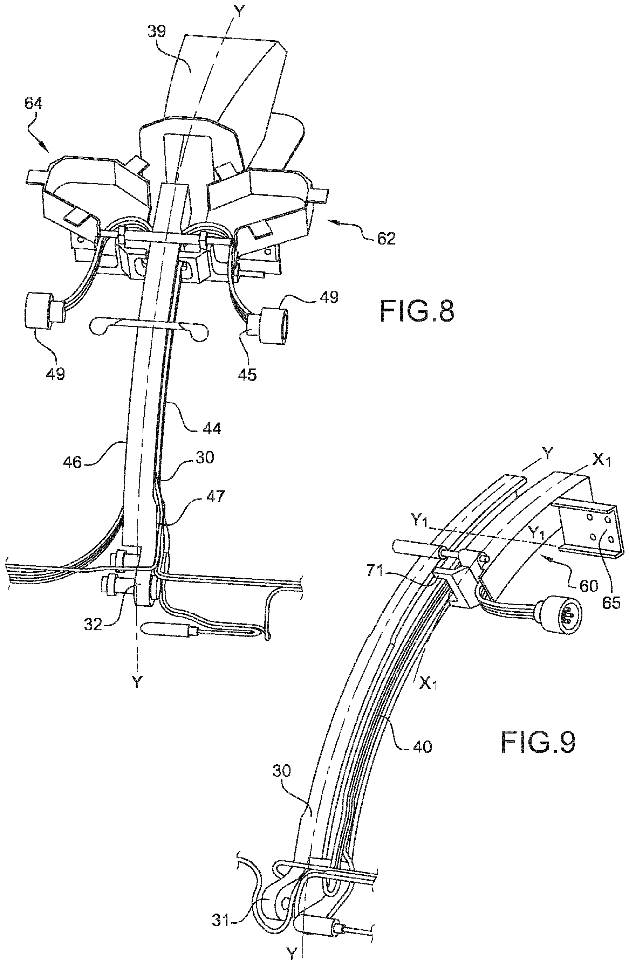

Le deuxième mode de réalisation, qui est représenté à la figure 8, se distingue du premier mode de réalisation en ce qu'il comporte deux tubulures souples 44, 46 agencées respectivement de chaque côté du rail 30, le long d'un des flancs 32 du rail, et deux boitiers de rangement 62, 64 qui sont chacun identique à celui du premier mode de réalisation décrit ci-dessus, pour ranger chacune des tubulures souples 44, 46.

Les tubulures souples 44, 46 sont sensiblement identiques à celles du premier mode de réalisation. Elles sont agencées symétriquement par symétrie plane par rapport à un plan de coupe longitudinale médiane du rail 30 qui comprend la direction longitudinale Y-Y du rail 30.

Le premier boitier 62 est orienté de manière sensiblement identique au boitier de rangement 50 du premier mode de réalisation par rapport au rail 30.

Le premier boitier 62 et le deuxième boitier 64 sont orientés sensiblement symétriquement par symétrie plane par rapport au plan de coupe longitudinale du rail 30.

La figure 9 représente un troisième mode de réalisation de l'invention qui se distingue du premier mode de réalisation par la forme du boitier 60 de rangement de la tubulure souple 40.

Le boitier 60 a une forme sensiblement parallélépipédique et il comporte une longueur selon sa direction longitudinale X₁-X₁ qui est nettement supérieure à celle de son épaisseur maximale dans une direction transversale Y₁-Y₁ du boitier 60 par rapport au boitier 50 du premier mode de réalisation. À titre indicatif, la longueur du boitier 60 selon sa direction longitudinale X₁-X₁ est environ égale à 5cm à 20cm celle du boitier 60 le long de sa direction transversale Y₁-Y₁.

La direction longitudinale X₁-X₁ du boitier 60 est parallèle à la direction longitudinale Y-Y du rail 30. Étant donné que le boitier 60 est plaqué contre le flanc 32 du rail et au vu de la faible épaisseur du boitier 60, la direction longitudinale X₁-X₁ du boitier 60 et la direction longitudinale Y-Y du rail 30 sont sensiblement coaxiales.

L'allongement du boitier 60 selon la direction longitudinale Y-Y du rail par rapport à celui du premier mode de réalisation permet de limiter son encombrement selon sa direction transversale Y₁-Y₁, c'est-à-dire selon la direction transversale du rail.

Le boitier de rangement 60 comporte une entrée pour la tubulure souple 40, une sortie pour la tubulure souple 40, une paroi 63 entre l'entrée et la sortie. L'entrée et la sortie du boitier 60 sont situées en regard du poussoir 71, elles sont sensiblement confondues, en étant seulement décalées l'une de l'autre selon la hauteur du boitier 60. Le boitier comporte également un rebord 65 pour fixer le boitier 60 au corps fixe 8.

La paroi 63 est monobloc. Le rebord de fixation 65 est fixé à la paroi 63.

La paroi 63 délimite latéralement le boitier 60. Elle comprend quatre éléments de paroi 63a, 63b, 63c et 63d qui sont deux à deux adjacents.

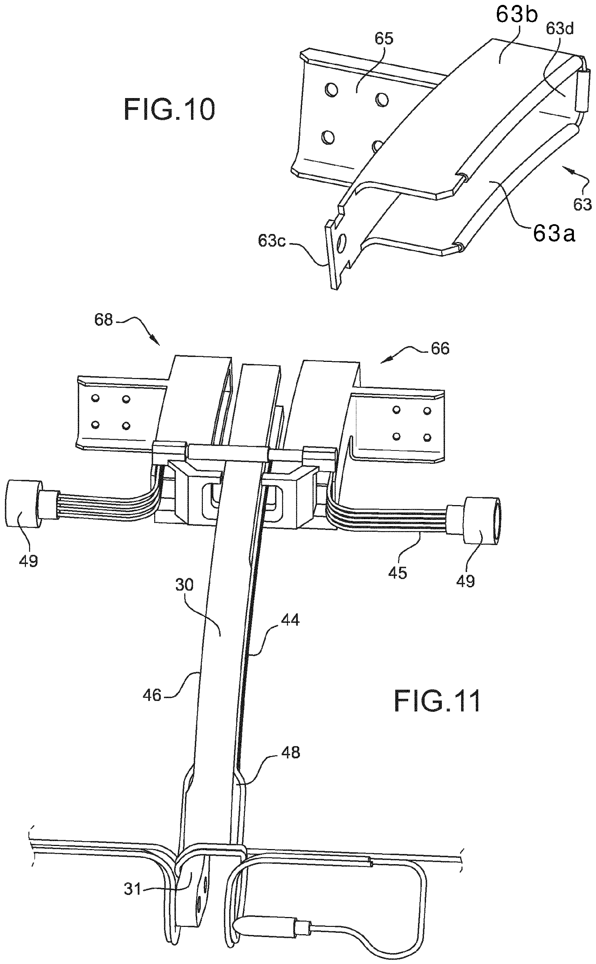

En référence plus spécifiquement à la figure 10, la paroi 63 comprend un élément de paroi inférieur 63a et un élément de paroi supérieur 63b qui sont incurvés et qui s'étendent selon la direction longitudinale X₁-X₁ du boitier 60, en étant parallèles l'un à l'autre. Ces deux éléments de paroi 63a, 63b sont réunis par un élément de paroi arrière 63d selon la direction transversale Y₁-Y₁ du boitier 60, et par un élément de paroi latéral 63c qui longe le rail 30. Le rebord de fixation 65 fait saillie de l'élément de paroi latéral 63c selon la direction transversale Y₁-Y₁ du boitier 60.

La paroi 63 ne comporte plus de déflecteur en sortie du boitier 60, puisque la tubulure souple 40 rentre et sort du boitier 60 selon une direction sensiblement parallèle à la direction longitudinale Y-Y du rail, du fait de la forme du boitier 60 et de sa position.

La paroi 63 comporte une face interne et une face externe opposée à la face interne qui délimitent un contour interne du boitier 60.

De manière générale, la paroi 63 est conformée de manière à ce que la tubulure souple 40 soit partiellement enroulée dans le boitier 60, en position rétractée du rail 30, en étant plaquée contre la face interne de la paroi 63.

Plus spécifiquement, le boitier 60 est conformé de manière à ce que la différence de longueur curviligne du rail L₁-L₂ en dehors de la boite de protection 39 soit sensiblement égale à la longueur du pourtour de la face interne de la paroi 63. De ce fait, la tubulure souple 40 fait au plus un tour de la paroi 63 à l'intérieur du boitier 60, ce qui limite les nœuds ou les risques d'accrochage de la tubulure souple 40 lorsque le rail 30 se déplace entre la position rétractée et la position déployée et vice versa.

Le boitier 60 ne comporte plus de barrière 57 entre son entrée et sa sortie, du fait de la forme de la paroi 63 du boitier 60.

Lorsque le rail 30 passe de sa position déployée représentée à la figure 9 à sa position rétractée (non représentée), une partie de la tubulure souple 40 qui longeait le rail 30 est guidée à l'intérieur du boitier 60 selon la direction longitudinale X₁-X₁ du boitier 60. Cette première portion de tubulure souple 40 a une forme de « U » dans le boitier 60 dont les branches s'allongent au fur et à mesure que le rail 30 se rétracte et que la tubulure 40 se rapproche de l'élément de paroi arrière 63d. Les branches du U sont en contact mécanique des éléments de paroi inférieur 63a et supérieur 63b.

Lorsque le rail 30 passe de sa position rétractée (non représentée) à sa position déployée représentée à la figure 9, la tubulure souple 40 s'éloigne de l'élément de paroi arrière 63d en conservant une forme de U dont les branches rétrécissent, tout en restant au contact de l'élément de paroi inférieur 63a et de l'élément de paroi supérieur 63b. Une partie de la tubulure souple 40 reste dans le boitier 60, même lorsque le rail 30 est en position déployée.

La figure 11 représente un quatrième mode de réalisation de l'invention qui se distingue du troisième mode de réalisation en ce qu'il comporte deux tubulures souples 44, 46 agencées respectivement de chaque côté du rail 30, le long d'un des flancs 32 du rail, et deux boitiers de rangement 66, 68 qui sont chacun identique à celui du troisième mode de réalisation décrit ci-dessus, pour ranger chacune des tubulures souples 44, 46.

Les tubulures souples 44, 46 sont sensiblement identiques à celles du premier mode de réalisation. Elles sont agencées symétriquement par symétrie plane par rapport à un plan de coupe longitudinale médiane du rail 30 qui comprend la direction longitudinale Y-Y du rail 30.

Le premier boitier 66 est orienté de manière sensiblement identique au boitier de rangement 60 du troisième mode de réalisation par rapport au rail 30.

Le premier boitier 66 et le deuxième boitier 68 sont orientés sensiblement symétriquement par symétrie plane par rapport au plan de coupe longitudinale du rail 30.

Chaque boitier 50, 60 et le moyen de maintien 70 permettent avantageusement à la tubulure souple 40 d'accompagner le mouvement du volet 16, en longeant le rail 30 et en restant à proximité de son flanc 32, tout en la protégeant mécaniquement. En particulier, la conformation du boitier 50, 60 permet un enroulement adéquat de la tubulure souple 40 dans le boitier, sans nœud pour faciliter son déploiement ultérieur en longeant le rail 30.

Bien entendu, diverses modifications peuvent être apportées par l'homme du métier à l'invention qui vient d'être décrite.

En particulier, le volet mobile 16 peut être un volet mobile de bord de fuite plutôt qu'un volet mobile de bord d'attaque.

Le volet mobile 16 est susceptible d'être équipé de capteurs de pression 18 qui ont besoin d'être reliés électriquement et/ou de manière pneumatique au corps fixe 8.

En variante, le système de dégivrage 17 est également susceptible de projeter de l'air chaud le long du bord d'attaque du volet mobile 16.

La tubulure souple 40 comprend alors un ou plusieurs tuyaux pneumatiques.

La tubulure 40 peut longer au moins un des rails d'entraînement 20 plutôt que le rail suiveur 30, même s'il est préférable qu'elle longe le rail suiveur 30 qui est situé dans son environnement moins encombré.

L'entrée 51 du boitier 50 peut être équipée d'un déflecteur, similaire au déflecteur 54 en sortie du boitier décrit ci-dessus, pour dévier la tubulure souple 40 de la direction longitudinale Y-Y du rail vers l'intérieur du boitier 50.

Le déflecteur 54 peut également dévier la tubulure souple 50 selon une direction inclinée par rapport à la direction longitudinale Y-Y du rail.

## Revendications

1. Aile d'aéronef (4) comprenant :
un corps central fixe (8),
un volet mobile (16) situé en périphérie du corps central fixe (8) et destiné à être déplacé en rotation relativement au corps central fixe (8) entre une position rentrée et une position déployée,
une tubulure souple (40) comprenant une première extrémité (45) raccordée au corps central fixe (8) et une deuxième extrémité (47) raccordée au volet mobile (16),
un rail de guidage (30) du volet mobile (16) et de la tubulure souple (40), le rail de guidage (30) étant configuré pour se déplacer entre une position rétractée et une position déployée, lorsque le volet mobile (16) se déplace de sa position rentrée à sa position déployée, **caractérisée en ce que** l'aile (4) comprend en outre :
un boitier de rangement (50, 60) de la tubulure souple (40), le boitier (50, 60) comprenant une paroi (61, 63) conformée de manière à ce que la tubulure souple (40) s'enroule dans le boitier (50, 60) en étant plaquée contre la paroi (61, 63), lorsque le rail de guidage (30) se déplace de sa position déployée à sa position rétractée, et
un moyen de maintien (70) de la tubulure souple (40) contre ou à proximité du rail de guidage (30), le moyen de maintien (70) étant porté par le corps central fixe (8), la tubulure souple (40) longeant extérieurement le rail de guidage (30) et étant fixée au rail de guidage (30) à proximité de l'extrémité distale (31) du rail (30) au niveau de laquelle le rail (30) est rattaché au volet mobile (16).

2. Aile (4) selon la revendication précédente, dans laquelle le moyen de maintien (70) comprend un poussoir (71), un moyen de fixation (72) configuré pour fixer le poussoir (71) au corps central fixe (8), et de préférence un moyen de rappel (73) sollicitant le poussoir (71) en direction du rail de guidage (30).

3. Aile (4) selon l'une quelconque des revendications précédentes, dans laquelle le moyen de maintien (70) est plus proche de l'extrémité proximale (33) du rail (30), à laquelle il est fixé au corps fixe (8), que de son extrémité distale (31).

4. Aile (4) selon l'une quelconque des revendications précédentes, dans laquelle la longueur du pourtour de la paroi (61) entre une entrée (51) du boitier et une sortie (53) du boitier est sensiblement égale à la différence de longueur (L₁-L₂) de la tubulure souple (40) le long du rail de guidage (30) entre la position rétractée du rail de guidage (30) et sa position déployée.

5. Aile (4) selon l'une quelconque des revendications précédentes, dans laquelle le boitier (50) comprend une entrée (51) et/ou une sortie (53) conformées de manière à guider la tubulure souple (40) pour que la tubulure (40) entre dans le boitier et/ou sorte du boitier, selon au moins une direction prédéterminée.

6. Aile (4) selon la revendication précédente, dans laquelle l'entrée/la sortie (53) du boitier comprend un déflecteur (54) configuré pour dévier la tubulure souple (40) selon une direction prédéterminée par rapport à la direction longitudinale (Y-Y) du rail de guidage.

7. Aile (4) selon l'une quelconque des revendications précédentes, dans laquelle le boitier (50) s'étend selon une direction longitudinale (X₁-X₁) qui est inclinée par rapport à la direction longitudinale (Y-Y) du rail de guidage.

8. Aile (4) selon l'une quelconque des revendications 1 à 7, dans laquelle le boitier (60) s'étend selon une direction longitudinale (X₁-X₁) qui est sensiblement parallèle à la direction longitudinale (Y-Y) du rail de guidage.

9. Aile (4) selon l'une quelconque des revendications précédentes, comprenant un deuxième boitier de rangement (64, 68) d'une deuxième tubulure souple (46), le deuxième boitier (64, 68) comprenant une paroi (61, 63) conformée de manière à ce que la deuxième tubulure souple (46) s'enroule dans le boîtier (64, 68) en étant plaquée contre la paroi (61, 63), lorsque le rail de guidage (30) se déplace de sa position déployée à sa position rétractée.

10. Aile (4) selon la revendication précédente, dans laquelle les deux tubulures souples (40, 44, 46) s'étendent le long de deux côtés opposés du rail de guidage (30), les boitiers de rangement (62, 64, 66, 68) étant situés chacun à un des côtés opposés du rail de guidage (30).

11. Aile (4) selon l'une quelconque des revendications précédentes, dans laquelle chaque tubulure souple (40, 44, 46) comprend plusieurs câbles (43) et/ou tuyaux solidarisés entre eux.

12. Aile (4) selon l'une quelconque des revendications précédentes, dans laquelle chaque tubulure souple (40, 44, 46) comprend un câble électrique (43) et/ou un tuyau pneumatique, le câble électrique (43) alimentant de préférence électriquement un système de dégivrage (17) du volet mobile (16).

13. Aile (4) selon l'une quelconque des revendications précédentes, comprenant un connecteur électrique (49) rigidement solidaire d'une face externe (52b) de paroi délimitant le boitier de rangement (50), la première extrémité (45) de la tubulure souple étant reliée électriquement au connecteur électrique (49).

## Patentansprüche

1. Flugzeugflügel (4), der umfasst:
einen unbeweglichen zentralen Körper (8),
eine bewegliche Klappe (16), die am Rand des unbeweglichen zentralen Körpers (8) gelegen ist und dazu bestimmt ist, relativ zum unbeweglichen zentralen Körper (8) zwischen einer eingezogenen Position und einer ausgefahrenen Position drehend verlagert zu werden,
einen flexiblen Schlauch (40), der ein am unbeweglichen zentralen Körper (8) angeschlossenes erstes Ende (45) und ein an der beweglichen Klappe (16) angeschlossenes zweites Ende (47) umfasst,
eine Führungsschiene (30) zum Führen der beweglichen Klappe (16) und des flexiblen Schlauchs (40), wobei die Führungsschiene (30) dazu ausgestaltet ist, sich zwischen einer eingezogenen Position und einer ausgefahrenen Position zu verlagern, wenn sich die bewegliche Klappe (16) aus ihrer eingezogenen Position in ihre ausgefahrene Position verlagert, **dadurch gekennzeichnet, dass** der Flügel (4) ferner umfasst:
ein Aufnahmegehäuse (50, 60) zum Aufnehmen des flexiblen Schlauchs (40), wobei das Gehäuse (50, 60) eine Wand (61, 63) umfasst, die derart ausgebildet ist, dass sich der flexible Schlauch (40) in dem Gehäuse (50, 60) aufrollt, wobei er gegen die Wand (61, 63) gepresst wird, wenn sich die Führungsschiene (30) aus ihrer ausgefahrenen Position in ihre eingezogene Position verlagert, und
ein Haltemittel (70) zum Halten des flexiblen Schlauchs (40) an der oder in der Nähe der Führungsschiene (30), wobei das Haltemittel (70) vom unbeweglichen zentralen Körper (8) getragen wird, wobei der flexible Schlauch (40) außen an der Führungsschiene (30) entlangläuft und an der Führungsschiene (30) in der Nähe des distalen Endes (31) der Schiene (30) fixiert ist, an dem die Schiene (30) an der beweglichen Klappe (16) befestigt ist.

2. Flügel (4) nach dem vorhergehenden Anspruch, wobei das Haltemittel (70) einen Andrücker (71), ein Fixierungsmittel (72), das dazu ausgestaltet ist, den Andrücker (71) am unbeweglichen zentralen Körper (8) zu fixieren, und bevorzugt ein Rückstellmittel (73), das den Andrücker (71) in Richtung der Führungsschiene (30) beaufschlagt, umfasst.

3. Flügel (4) nach einem der vorhergehenden Ansprüche, wobei das Haltemittel (70) dem proximalen Ende (33) der Schiene (30), an dem es am unbeweglichen Körper (8) fixiert ist, näher als deren distalem Ende (31) ist.

4. Flügel (4) nach einem der vorhergehenden Ansprüche, wobei die Länge des äußeren Umfangs der Wand (61) zwischen einem Einlass (51) des Gehäuses und einem Auslass (53) des Gehäuses im Wesentlichen gleich der Längendifferenz (L₁-L₂) des flexiblen Schlauchs (40) entlang der Führungsschiene (30) zwischen der eingezogenen Position der Führungsschiene (30) und ihrer ausgefahrenen Position ist.

5. Flügel (4) nach einem der vorhergehenden Ansprüche, wobei das Gehäuse (50) einen Einlass (51) und/oder einen Auslass (53) umfasst, die derart ausgebildet sind, dass der flexible Schlauch (40) geführt wird, damit der Schlauch (40) entlang mindestens einer vorbestimmten Richtung in das Gehäuse eintritt und/oder aus dem Gehäuse austritt.

6. Flügel (4) nach dem vorhergehenden Anspruch, wobei der Einlass/Auslass (53) des Gehäuses einen Ablenker (54) umfasst, der dazu ausgestaltet ist, den flexiblen Schlauch (40) entlang einer vorbestimmten Richtung in Bezug auf die Längsrichtung (Y-Y) der Führungsschiene umzulenken.

7. Flügel (4) nach einem der vorhergehenden Ansprüche, wobei sich das Gehäuse (50) entlang einer Längsrichtung (X₁-X₁) erstreckt, die in Bezug auf die Längsrichtung (Y-Y) der Führungsschiene geneigt ist.

8. Flügel (4) nach einem der Ansprüche 1 bis 7, wobei sich das Gehäuse (60) entlang einer Längsrichtung (X₁-X₁) erstreckt, die im Wesentlichen parallel zur Längsrichtung (Y-Y) der Führungsschiene ist.

9. Flügel (4) nach einem der vorhergehenden Ansprüche, der ein zweites Aufnahmegehäuse (64, 68) zum Aufnehmen eines zweiten flexiblen Schlauchs (46) umfasst, wobei das zweite Gehäuse (64, 68) eine Wand (61, 63) umfasst, die derart ausgebildet ist, dass sich der zweite flexible Schlauch (46) in dem Gehäuse (64, 68) aufrollt, wobei er gegen die Wand (61, 63) gepresst wird, wenn sich die Führungsschiene (30) aus ihrer ausgefahrenen Position in ihre eingezogene Position verlagert.

10. Flügel (4) nach dem vorhergehenden Anspruch, wobei sich die beiden flexiblen Schläuche (40, 44, 46) entlang von zwei entgegengesetzten Seiten der Führungsschiene (30) erstrecken, wobei jedes der Aufnahmegehäuse (62, 64, 66, 68) auf einer der entgegengesetzten Seiten der Führungsschiene (30) gelegen ist.

11. Flügel (4) nach einem der vorhergehenden Ansprüche, wobei jeder flexible Schlauch (40, 44, 46) mehrere untereinander fest verbundene Kabel (43) und/oder Leitungen umfasst.

12. Flügel (4) nach einem der vorhergehenden Ansprüche, wobei jeder flexible Schlauch (40, 44, 46) ein Stromkabel (43) und/oder eine Druckluftleitung umfasst, wobei das Stromkabel (43) bevorzugt ein Enteisungssystem (17) der beweglichen Klappe (16) mit Strom versorgt.

13. Flügel (4) nach einem der vorhergehenden Ansprüche, der einen elektrischen Verbinder (49) umfasst, der mit einer Außenfläche (52b) der das Aufnahmegehäuse (50) begrenzenden Wand starr verbunden ist, wobei das erste Ende (45) des flexiblen Schlauchs mit dem elektrischen Verbinder (49) elektrisch verbunden ist.

## Claims

1. An aircraft wing (4) comprising:
a fixed central body (8),
a movable flap (16) located at the periphery of the fixed central body (8) and for being rotatably moved relatively to the fixed central body (8) between a retracted position and an extended position,
a flexible piping (40) comprising a first end (45) connected to the fixed central body (8) and a second end (47) connected to the movable flap (16),
a guide rail (30) for guiding the movable flap (16) and the flexible piping (40), the guide rail (30) being configured to move between a retracted position and an extended position, when the movable flap (16) moves from its retracted position to its extended position, **characterised in that** the wing (4) further comprises:
an accommodating housing (50, 60) for accommodating the flexible piping (40), the housing (50, 60) comprising a wall (61, 63) shaped such that the flexible piping (40) coils up inside the housing (50, 60) by being pressed against the wall (61, 63), when the guide rail (30) moves from its extended position to its retracted position, and
a holding means (70) for holding the flexible piping (40) against or in the proximity of the guide rail (30), the holding means (70) being carried by the fixed central body (8), the flexible piping (40) running externally along the guide rail (30) and being secured to the guide rail (30) in the proximity of the distal end (31) of the rail (30) at which the rail (30) is attached to the movable flap (16).

2. The wing (4) according to the preceding claim, wherein the holding means (70) comprises a pusher (71), a securement means (72) configured to secure the pusher (71) to the fixed central body (8), and preferably a return means (73) biasing the pusher (71) towards the guide rail (30).

3. The wing (4) according to any of the preceding claims, wherein the holding means (70) is closer to the proximal end (33) of the rail (30), at which it is secured to the fixed body (8), than its distal end (31).

4. The wing (4) according to any of the preceding claims, wherein the perimeter length of the wall (61) between an inlet (51) of the housing and an outlet (53) of the housing is substantially equal to the length difference (L₁-L₂) of the flexible piping (40) along the guide rail (30) between the retracted position and the extended position of the guide rail (30).

5. The wing (4) according to any of the preceding claims, wherein the housing (50) comprises an inlet (51) and/or an outlet (53) shaped so as to guide the flexible piping (40) such that the piping (40) comes in the housing and/or comes out the housing, along at least one predetermined direction.

6. The wing (4) according to the preceding claim, wherein the inlet/outlet (53) of the housing comprises a deflector (54) configured to deflect the flexible piping (40) along a predetermined direction relative to the longitudinal direction (Y-Y) of the guide rail.

7. The wing (4) according to any of the preceding claims, wherein the housing (50) extends along a longitudinal direction (X₁-X₁) which is tilted relative to the longitudinal direction (Y-Y) of the guide rail.

8. The wing (4) according to any of claims 1 to 7, wherein the housing (60) extends along a longitudinal direction (X₁-X₁) which is substantially parallel to the longitudinal direction (Y-Y) of the guide rail.

9. The wing (4) according to any of the preceding claims, comprising a second accommodating housing (64, 68) for accommodating a second flexible piping (46), the second housing (64, 68) comprising a wall (61, 63) shaped such that the second flexible piping (46) coils up inside the housing (64, 68) by being pressed against the wall (61, 63), when the guide rail (30) moves from its extended position to its retracted position.

10. The wing (4) according to the preceding claim, wherein both flexible pipings (40, 44, 46) extend along two opposite sides of the guide rail (30), the accommodating housings (62, 64, 66, 68) being each located at one of the opposite sides of the guide rail (30).

11. The wing (4) according to any of the preceding claims, wherein each flexible piping (40, 44, 46) comprises several cables (43) and/or pipes fastened together.

12. The wing (4) according to any of the preceding claims, wherein each flexible piping (40, 44, 46) comprises an electric cable (43) and/or a pneumatic pipe, the electric cable (43) supplying preferably electrically a defrosting system (17) for the movable flap (16).

13. The wing (4) according to any of the preceding claims, comprising an electric connector (49) rigidly integral with a wall outer face (52b) delimiting the accommodating housing (50), the first end (45) of the flexible piping being electrically connected to the electric connector (49).
